# EUROPEAN PATENT APPLICATION

(11) **EP 4 629 201 A1**
(43) Date of publication of application: **08.10.2025**
(21) Application number: 23896113.0
(22) Date of filing: 11.08.2023
(51) Int. Cl.: G07B 15/02

(54) **PARKING PAYMENT METHOD, APPARATUS AND SYSTEM**

(30) Priority: 30.11.2022 CN 202211529001
(71) Applicant: Shenzhen Yinwang Intelligent Technologies Co., Ltd., Shenzhen, Guangdong 518129 (CN)
(72) Inventor: WANG, Jing, Shenzhen, Guangdong 518129 (CN); YANG, Jinghuan, Shenzhen, Guangdong 518129 (CN)
(74) Representative: Gill Jennings & Every LLP
(86) International application number: PCT/CN2023/112697
(87) International publication number: WO 2024/113952

(57) **Abstract**

A parking payment method, apparatus, and system are provided. The parking payment method includes: obtaining sensing information collected by a vehicle-mounted sensing apparatus, where the sensing information is used to determine payment information of a parking lot in which a vehicle (100) is located; and sending the payment information of the parking lot to a server (200) after paying a parking fee of the vehicle (100) in the parking lot based on the sensing information.

## Description

### CROSS-REFERENCE TO RELATED APPLICATIONS

This application claims priority to Chinese Patent Application No. 202211529001.6, filed with the China National Intellectual Property Administration on November 30, 2022 and entitled "PARKING PAYMENT METHOD, APPARATUS, AND SYSTEM", which is incorporated herein by reference in its entirety.

### TECHNICAL FIELD

This application relates to the field of intelligent vehicle technologies, and in particular, to a parking payment method, apparatus, and system.

### BACKGROUND

Currently, an operation of paying a fare by scanning a QR code in a parking lot is complex. Especially when a signal in an underground parking lot is poor, it takes long time to pay the fare, and congestion is likely to occur during peak hours of traffic. This problem has always been a pain point of vehicle user experience. How to improve user experience of parking payment is worth studying.

### SUMMARY

Embodiments of this application provide a parking payment method, apparatus, and system, to help improve convenience of parking payment and reduce a delay and a failure rate of parking payment.

A carrier in this application may include road transportation, water transportation, air transportation, an industrial device, an agricultural device, an entertainment device, or the like. For example, the carrier may be a vehicle. The vehicle is a vehicle in a broad sense, and may be transportation (such as a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the carrier may be transportation such as an aircraft or a ship. The following uses an example in which the carrier is a vehicle for description.

According to a first aspect, this application provides a parking payment method, including:
obtaining sensing information collected by a vehicle-mounted sensing apparatus, where the sensing information is used to determine payment information of a parking lot in which a vehicle is located; and
sending the payment information of the parking lot to a server after paying a parking fee of the vehicle in the parking lot based on the sensing information.

Based on the foregoing solution, in this application, the parking fee of the vehicle is paid by using the sensing information collected in a parking lot environment, so that the vehicle can pay the parking fee before leaving the parking lot, to avoid congestion. In addition, in this application, the vehicle uploads the payment information to the server after successfully paying the parking fee, to improve accuracy of the payment information of the parking lot maintained in the server, so that the server can provide accurate payment information for the vehicle when the vehicle does not collect the sensing information in the parking lot.

**In** some embodiments, the sensing information includes a payment image captured by the vehicle in the parking lot, and the method further includes:
determining a first payment image from payment images captured by the vehicle in the parking lot, where the first payment image is an image that is capable of being used to pay the parking fee of the vehicle in the parking lot; and
the sending the payment information of the parking lot to a server after paying a parking fee of the vehicle in the parking lot based on the sensing information includes:
   sending payment information related to the first payment image of the parking lot to the server after paying the parking fee of the vehicle in the parking lot based on the first payment image.

Based on the foregoing solution, after a plurality of captured payment images are used, the payment image that is capable of being used to pay the parking fee is first determined from the plurality of captured payment images, and then payment and uploading are performed. This improves efficiency of paying the parking fee.

**In** some embodiments, the method further includes:
sending a first request to the server after the vehicle enters the parking lot, where the first request is used to request the payment information of the parking lot; and
receiving a first response returned by the server, where the first response indicates that the server is not capable of providing the payment information of the parking lot.

Based on the foregoing solution, in this application, before the payment image in the parking lot is captured, it is first determined that the server is not capable of providing the payment information. This avoids a problem that processing resources of the vehicle-mounted terminal are wasted because the vehicle-mounted terminal still captures the payment image when the server can provide the payment information.

In some embodiments, the vehicle-mounted sensing apparatus includes a collection device configured to collect a traveling video; and the obtaining sensing information collected by a vehicle-mounted sensing apparatus includes:
when it is detected that the video collected by the collection device includes a to-be-captured payment image, determining a distance between the vehicle and the to-be-captured payment image; and
adjusting a zoom ratio of the collection device based on the distance, and obtaining a payment image captured by the collection device after the zoom ratio is adjusted.

Based on the foregoing solution, in this application, the zoom ratio of the collection device is adjusted based on the distance between the vehicle and the payment image, to improve resolution of the captured payment image, and further improve availability of the captured payment image.

In some embodiments, before the vehicle enters the parking lot, the method further includes:
obtaining a traveling direction of the vehicle and a geographical location in which the vehicle is currently located; and
sending the traveling direction of the vehicle and the geographical location in which the vehicle is currently located to the server.

The traveling direction of the vehicle and the geographical location of the vehicle are used by the server to retrieve the payment information of the parking lot.

Because positioning precision of a current positioning system is insufficient, in the conventional technology, an error is prone to occur when the server determines, based on a location of the vehicle, a parking lot in which the vehicle is located. In this application, a location of the vehicle before the vehicle enters the parking lot and the traveling direction of the vehicle are used to assist in determining the parking lot that the vehicle is to enter, so that accuracy of retrieving the parking lot payment information by the server can also be improved.

In some embodiments, the determining a first payment image from payment images captured by the vehicle in the parking lot includes:
separately scanning the payment images captured in the parking lot, and determining a control that is included in a scanning result and that is used to input a license plate number of the vehicle; and
determining, based on parking record information generated when the stored license plate number of the vehicle is input into the control, the first payment image from the payment images captured in the parking lot.

Based on the foregoing solution, after capturing the payment image, the vehicle-mounted terminal automatically scans the payment image and automatically fills in the license plate number, and determines, from the plurality of captured payment images based on the generated parking record information, the payment image that is capable of being used to pay the parking fee.

In some embodiments, the plurality of captured payment images are separately scanned, and a payment image of the control that is included in the scanning result and that is used to input the license plate number of the vehicle is used as the first payment image.

Based on the foregoing solution, before the uploading, it is determined that an uploaded payment image is used to pay the parking fee, to avoid uploading incorrect payment information.

In some embodiments, the plurality of captured payment images are separately scanned, and at least one payment image of the control that is included in the scanning result and that is used to input the license plate number of the vehicle is used as the first payment image is determined.

The stored license plate number of the vehicle is input into a control that is included in a scanning result of the at least one payment image, and a payment image of generated parking record information of the vehicle in the parking lot is used as the first payment image.

Based on the foregoing solution, before the uploading, it is determined that the payment image is used to pay the parking fee, and that the parking record information of the vehicle can be generated, to ensure that uploaded payment information is accurate.

In some embodiments, the plurality of captured payment images are separately scanned, and at least one payment image of the control that is included in the scanning result and that is used to input the license plate number of the vehicle is used as the first payment image is determined.

The stored license plate number of the vehicle is input into a control that is included in a scanning result of the at least one payment image, and a payment image in which a time difference between start time at which the vehicle enters the parking lot and that is recorded in the generated parking record information and start time at which the vehicle enters the parking lot and that is stored in the vehicle-mounted terminal of the vehicle is less than a specified threshold is used as the first payment image.

Based on the foregoing solution, before the uploading, it is determined that the payment image is used to pay the parking fee, the parking record information of the vehicle can be generated, and the generated parking record information is accurate, to avoid uploading a malicious phishing QR code.

In some embodiments, that the vehicle enters the parking lot is determined includes:
when it is recognized that the vehicle meets one or more of the following conditions, determining that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that the video collected by the collection device includes a parking sign of the parking lot.

In some embodiments, before the sending the payment information of the parking lot to a server, the method further includes:
displaying a first interface on a display, where the first interface includes a first control, and the first control is used to request whether to allow sending the payment information to the server; and
sending the payment information to the server in response to an operation that is performed by a user on the first control and that allows sending the payment information to the server.

Based on the foregoing solution, before the payment information is uploaded to the server, user authorization is first obtained, to ensure security of user information.

According to a second aspect, this application provides another parking payment method, including:
obtaining sensing information collected by a vehicle-mounted sensing apparatus, where the sensing information includes a payment image of a parking lot;
determining a first payment image from payment images based on scanning results of the payment images, where the first payment image is an image that is capable of being used to pay a parking fee of the parking lot in which e vehicle is located; and
sending the payment information related to the first payment image to a server.

Optionally, the payment image is a payment code image, a two-dimensional code image, or another image that is capable of being used to pay a parking fee of a parking lot.

Based on the foregoing solution, the solution of this application no longer completely depends on a manually constructed cloud database, and maintenance and management of the payment information of the parking lot is implemented by using the payment information uploaded by the vehicle-mounted terminal of the vehicle. Compared with a conventional manual creation manner, this manner can effectively improve management efficiency of payment information of the parking lot. In addition, a coverage area of the payment information of the parking lot managed by the server can be increased, to avoid a problem that user experience is poor because the payment information of the parking lot cannot be updated in time when the parking lot is newly added or the payment information of the parking lot changes.

**In** some embodiments, the method further includes:
sending a first request to the server after the vehicle enters the parking lot, where the first request is used to request the payment information of the parking lot; and
receiving a first response returned by the server, where the first response indicates that the server fails to retrieve the payment information of the parking lot.

**In** some embodiments, the scanning result of the first payment image includes a control used to input a license plate number of the vehicle.

**In** some embodiments, the scanning result of the first payment image includes the control used to input the license plate number of the vehicle, and parking record information of the vehicle in the parking lot is generated when the stored license plate number of the vehicle is input into the control.

**In** some embodiments, the scanning result of the first payment image includes the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

**In** some embodiments, that the vehicle enters the parking lot is determined includes:
when it is recognized that the vehicle meets one or more of the following conditions, determining that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that a video collected by a collection device includes a parking sign of the parking lot.

**In** some embodiments, before the vehicle enters the parking lot, the method further includes:
obtaining a traveling direction of the vehicle and a geographical location in which the vehicle is currently located; and
sending the traveling direction of the vehicle and the geographical location in which the vehicle is currently located to the server.

The traveling direction of the vehicle and the geographical location of the vehicle are used by the server to retrieve the payment information of the parking lot.

In some embodiments, the vehicle-mounted sensing apparatus includes a collection device configured to collect a traveling video; and the obtaining sensing information collected by a vehicle-mounted sensing apparatus includes:
when it is detected that the video collected by the collection device includes a to-be-captured payment image, determining a distance between the vehicle and the to-be-captured payment image; and
adjusting a zoom ratio of the collection device based on the distance, and obtaining a payment image captured by the collection device after the zoom ratio is adjusted.

In some embodiments, before the sending the payment information related to the first payment image to a server, the method further includes:
displaying a first interface on a display, where the first interface includes a first control, and the first control is used to request whether to allow sending the payment information to the server; and
sending the payment information to the server in response to an operation that is performed by a user on the first control and that allows sending the payment information to the server.

In some embodiments, the payment information includes a payment link obtained by converting the payment image.

In this application, the captured payment image may be directly uploaded to the server, or the image may be converted into a payment link and then the payment link is uploaded to the server. The payment link is uploaded. Correspondingly, the server may also maintain the payment link of each parking lot. Because the payment link occupies less storage space than the payment image, the server can effectively reduce storage costs by maintaining the payment link.

According to a third aspect, this application provides another parking payment method, where the method includes:
receiving payment information that is sent by a vehicle-mounted terminal of a vehicle and that is of a parking lot in which the vehicle is located, where the payment information is used to pay a parking fee of the parking lot; and
storing the payment information of the parking lot.

In some embodiments, the method further includes:
receiving a first request from the vehicle-mounted terminal, where the first request is used to request the payment information of the parking lot, and the first request carries a first geographical location in which the vehicle is currently located; and
determining, based on the first geographical location, the parking lot in which the vehicle is located, and when determining that the payment information of the parking lot is not capable of being provided, returning a first response to the vehicle-mounted terminal.

In some embodiments, before the receiving a first request from the vehicle-mounted terminal, the method further includes:
receiving a second geographical location in which the vehicle is located before the vehicle enters the parking lot and a traveling direction of the vehicle that are sent by the vehicle-mounted terminal, where a distance between the second geographical location and the parking lot is less than a first distance threshold;
obtaining at least one parking lot within a specified range of the second geographical location; and
predicting, from the at least one parking lot based on the traveling direction of the vehicle, a parking lot that the vehicle is to enter; and
the determining that the payment information of the parking lot is not capable of being provided includes:
   when the first geographical location is in the predicted parking lot, retrieving no payment information of the predicted parking lot from the database; or
   when the first geographical location is outside the predicted parking lot, determining at least one candidate parking lot based on the first geographical location; and retrieving no payment information of any one of the at least one candidate parking lot from the database, where a distance between an entrance of the any one of the at least one candidate parking lot and the first geographical location is less than a second distance threshold.

Based on the foregoing solution, in this application, the payment information of the parking lot is not simply retrieved by using the positioning result obtained after the vehicle enters the parking lot, and a parking lot that the vehicle is to enter is predicted based on the driving direction and the geographical location of the vehicle before the vehicle enters the parking lot. The payment information of the parking lot is retrieved together with the predicted parking lot and the positioning result after the vehicle enters the parking lot. According to the solution in this application, impact of insufficient positioning precision on accuracy of a retrieval result can be avoided, and retrieval accuracy can be improved.

In some embodiments, a quantity of candidate parking lots is N, and the method further includes:
when retrieving payment information of M candidate parking lots in the N candidate parking lots from the database, determining confidence of the M candidate parking lots, where M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determining at least one candidate parking lot from the M candidate parking lots based on the confidence of the M candidate parking lots, and sending payment information of the at least one candidate parking lot to a terminal device of a vehicle owner.

Based on the foregoing solution, further in this application, when a plurality of pieces of payment information are retrieved, a specified quantity of pieces of payment information are sent to a terminal device of a vehicle owner based on confidence of each piece of payment information. Compared with the conventional technology in which only one retrieved payment image is sent, the solution of this application can compensate for impact caused by an update or a retrieval error of the payment information of the parking lot, and improve user experience.

In some embodiments, the payment information is sent by the vehicle-mounted terminal after the parking fee of the vehicle in the parking lot is paid, and the method further includes:
when determining that the payment information of the parking lot is stored in the database, updating a quantity of access times of the stored payment information.

Based on the foregoing solution, the server may manage and maintain each piece of payment information based on a quantity of access times of each piece of payment information, to improve accuracy of the stored payment information.

In some embodiments, the method further includes:
obtaining a quantity of access times and latest access time of each of a plurality of pieces of stored payment information;
determining expired payment information in the plurality of pieces of payment information, where a time difference between latest access time of the expired payment information and a current moment is greater than a time threshold, and a quantity of access times of the expired payment information is less than a quantity-of-times threshold; and
deleting the expired payment information.

According to a fourth aspect, an embodiment of this application provides a parking payment apparatus, where the apparatus includes a processing unit and a communication unit.

The processing unit is configured to obtain sensing information collected by a vehicle-mounted sensing apparatus, where the sensing information is used to determine payment information of a parking lot in which a vehicle is located; and
the processing unit is further configured to: after paying a parking fee of the vehicle in the parking lot based on the sensing information, send the payment information of the parking lot to a server through the communication unit.

**In** some embodiments, the sensing information includes a payment image captured by the vehicle in the parking lot, and the processing unit is further configured to:
determine a first payment image from payment images captured by the vehicle in the parking lot, where the first payment image is an image that is capable of being used to pay the parking fee of the vehicle in the parking lot; and
the processing unit is specifically configured to:
   after paying the parking fee of the vehicle in the parking lot based on the first payment image, send the payment information related to the first payment image of the parking lot to the server through the communication unit.

**In** some embodiments, the communication unit is further configured to:
send a first request to the server after the vehicle enters the parking lot, where the first request is used to request the payment information of the parking lot; and
receive a first response returned by the server, where the first response indicates that the server is not capable of providing the payment information of the parking lot.

**In** some embodiments, the vehicle-mounted sensing apparatus includes a collection device configured to collect a traveling video; and the processing unit is specifically configured to:
when it is detected that the video collected by the collection device includes a to-be-captured payment image, determine a distance between the vehicle and the to-be-captured payment image; and
adjust a zoom ratio of the collection device based on the distance, and obtain a payment image captured by the collection device after the zoom ratio is adjusted.

**In** some embodiments, before the vehicle enters the parking lot, the processing unit is further configured to:
obtain a traveling direction of the vehicle and a geographical location in which the vehicle is currently located; and
send the traveling direction of the vehicle and the geographical location in which the vehicle is currently located to the server through the communication unit.

The traveling direction of the vehicle and the geographical location of the vehicle are used by the server to retrieve the payment information of the parking lot.

In some embodiments, the processing unit is specifically configured to:
separately scan the payment images captured in the parking lot, and determine a control that is included in a scanning result and that is used to input a license plate number of the vehicle; and
determine, based on parking record information generated when the stored license plate number of the vehicle is input into the control, the first payment image from the payment images captured in the parking lot.

In some embodiments, a scanning result of the first payment image includes the control used to input the license plate number of the vehicle.

In some embodiments, a scanning result of the first payment image includes the control used to input the license plate number of the vehicle, and the parking record information of the vehicle in the parking lot is generated when the stored license plate number of the vehicle is input into the control.

In some embodiments, a scanning result of the first payment image includes the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

In some embodiments, the processing unit is further configured to:
when it is recognized that the vehicle meets one or more of the following conditions, determine that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that the video collected by the collection device includes a parking sign of the parking lot.

In some embodiments, the processing unit is further configured to:
display a first interface on a display, where the first interface includes a first control, and the first control is used to request whether to allow sending the payment information to the server; and
indicate the communication unit to send the payment information to the server in response to an operation that is performed by a user on the first control and that allows sending the payment information to the server.

According to a fifth aspect, this application provides another parking payment apparatus, where the apparatus includes:
a communication unit, configured to receive payment information that is sent by a vehicle-mounted terminal of a vehicle and that is of a parking lot in which the vehicle is located, where the payment information is used to pay a parking fee of the parking lot; and
a storage unit, configured to store the payment information of the parking lot.

**In** some embodiments, the apparatus further includes a processing unit,
the communication unit is further configured to receive a first request from the vehicle-mounted terminal, where the first request is used to request the payment information of the parking lot, and the first request carries a first geographical location in which the vehicle is currently located; and
the processing unit is configured to: determine, based on the first geographical location, the parking lot in which the vehicle is located, and when determining that the payment information of the parking lot is not capable of being provided, return a first response to the vehicle-mounted terminal through the communication unit.

**In** some embodiments, before receiving the first request from the vehicle-mounted terminal, the communication unit is further configured to receive a second geographical location in which the vehicle is located before the vehicle enters the parking lot and a traveling direction of the vehicle that are sent by the vehicle-mounted terminal, where a distance between the second geographical location and the parking lot is less than a first distance threshold.

The processing unit is further configured to: obtain at least one parking lot within a specified range of the second geographical location, and predict, from the at least one parking lot based on the traveling direction of the vehicle, a parking lot that the vehicle is to enter; and
when determining that the payment information of the parking lot is not capable of being provided, the processing unit is specifically configured to:
when the first geographical location is in the predicted parking lot, retrieve no payment information of the predicted parking lot from the database; or
when the first geographical location is outside the predicted parking lot, determine at least one candidate parking lot based on the first geographical location; and retrieve no payment information of any one of the at least one candidate parking lot from the database, where a distance between an entrance of the any one of the at least one candidate parking lot and the first geographical location is less than a second distance threshold.

**In** some embodiments, a quantity of candidate parking lots is N, and the processing unit is further configured to:
when retrieving payment information of M candidate parking lots in the N candidate parking lots from the database, determine confidence of the M candidate parking lots, where M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determine at least one candidate parking lot from the M candidate parking lots based on the confidence of the M candidate parking lots, and indicate the communication unit to send payment information of the at least one candidate parking lot to a terminal device of a vehicle owner.

**In** some embodiments, the payment information is sent by the vehicle-mounted terminal after the parking fee of the vehicle in the parking lot is paid, and the processing unit is further configured to:
when determining that the payment information of the parking lot is stored in the database, update a quantity of access times of the payment information stored in the storage unit.

**In** some embodiments, the processing unit is further configured to:
obtain a quantity of access times and latest access time of each of a plurality of pieces of stored payment information;
determine expired payment information in the plurality of pieces of payment information, where a time difference between latest access time of the expired payment information and a current moment is greater than a time threshold, and a quantity of access times of the expired payment information is less than a quantity-of-times threshold; and
delete the expired payment information.

According to a sixth aspect, an embodiment of this application provides a parking payment system, where the system includes:
a vehicle-mounted terminal, configured to obtain sensing information collected by a vehicle-mounted sensing apparatus, where the sensing information is used to determine payment information of a parking lot in which a vehicle is located, where
the vehicle-mounted terminal is further configured to send the payment information of the parking lot to a server after paying a parking fee of the vehicle in the parking lot based on the sensing information; and
the server, configured to receive and store the payment information.

**In** some embodiments, the sensing information includes a payment image captured by the vehicle in the parking lot, and the vehicle-mounted terminal is further configured to:
determine a first payment image from payment images captured by the vehicle in the parking lot, where the first payment image is an image that is capable of being used to pay the parking fee of the vehicle in the parking lot; and
the vehicle-mounted terminal is specifically configured to:
   send payment information related to the first payment image of the parking lot to the server after paying the parking fee of the vehicle in the parking lot based on the first payment image.

**In** some embodiments, the vehicle-mounted terminal is further configured to send a first request to the server after the vehicle enters the parking lot, where the first request is used to request the payment information of the parking lot;
the server is further configured to: receive the first request, determine, based on the first geographical location, the parking lot in which the vehicle is located, and when determining that the payment information of the parking lot is not capable of being provided, return a first response to the vehicle-mounted terminal; and
the vehicle-mounted terminal is further configured to receive the first response.

**In** some embodiments, the vehicle-mounted sensing apparatus includes a collection device configured to collect a traveling video, and the vehicle-mounted terminal is specifically configured to:
when it is detected that the video collected by the collection device includes a to-be-captured payment image, determine a distance between the vehicle and the to-be-captured payment image; and
adjust a zoom ratio of the collection device based on the distance, and obtain a payment image captured by the collection device after the zoom ratio is adjusted.

**In** some embodiments, before the vehicle enters the parking lot, the vehicle-mounted terminal is further configured to: obtain a traveling direction of the vehicle and a second geographical location in which the vehicle is currently located, and send the traveling direction of the vehicle and the second geographical location to the server, where a distance between the second geographical location and the parking lot is less than a first distance threshold; and
receive the traveling direction of the vehicle and the second geographical location, and obtain at least one parking lot within a specified range of the second geographical location;

The server is further configured to predict, from the at least one parking lot based on the traveling direction of the vehicle, a parking lot that the vehicle is to enter; and
when determining that the payment information of the parking lot is not capable of being provided, the server is specifically configured to:
when the first geographical location is in the predicted parking lot, retrieve no payment information of the predicted parking lot from the database; or
when the first geographical location is outside the predicted parking lot, determine at least one candidate parking lot based on the first geographical location; and retrieve no payment information of any one of the at least one candidate parking lot from the database, where a distance between an entrance of the any one of the at least one candidate parking lot and the first geographical location is less than a second distance threshold.

**In** some embodiments, a quantity of candidate parking lots is N, and the server is further configured to:
when retrieving payment information of M candidate parking lots in the N candidate parking lots from the database, determine confidence of the M candidate parking lots, where M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determine at least one candidate parking lot from the M candidate parking lots based on the confidence of the M candidate parking lots, and send payment information of the at least one candidate parking lot to a terminal device of a vehicle owner.

**In** some embodiments, the server is further configured to:
when determining that the payment information of the parking lot is stored in the database, update the quantity of access times of the stored payment information.

**In** some embodiments, the server is further configured to:
obtain a quantity of access times and latest access time of each of a plurality of pieces of stored payment information;
determine expired payment information in the plurality of pieces of payment information, where a time difference between latest access time of the expired payment information and a current moment is greater than a time threshold, and a quantity of access times of the expired payment information is less than a quantity-of-times threshold; and
delete the expired payment information.

**In** some embodiments, the vehicle-mounted terminal is specifically configured to:
separately scan the payment images captured in the parking lot, and determine a control that is included in a scanning result and that is used to input a license plate number of the vehicle; and
determine, based on parking record information generated when the stored license plate number of the vehicle is input into the control, the first payment image from the payment images captured in the parking lot.

**In** some embodiments, the scanning result of the first payment image includes a control used to input a license plate number of the vehicle.

In some embodiments, the scanning result of the first payment image includes the control used to input the license plate number of the vehicle, and the parking record information of the vehicle in the parking lot is generated when the stored license plate number of the vehicle is input into the control.

In some embodiments, the scanning result of the first payment image includes the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

**In** some embodiments, the vehicle-mounted terminal is further configured to:
when it is recognized that the vehicle meets one or more of the following conditions, determine that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that a video collected by a collection device includes a parking sign of the parking lot.

In some embodiments, the vehicle-mounted terminal is further configured to:
displaying a first interface on a display, where the first interface includes a first control, and the first control is used to request whether to allow sending the payment information to the server; and
send the payment information to the server in response to an operation that is performed by a user on the first control and that allows sending the payment information to the server.

According to a seventh aspect, an embodiment of this application provides another parking payment apparatus, including a processor and a memory. The memory is configured to store a program, and the processor is configured to execute the program stored in the memory, so that the apparatus implements the method according to any one of the first aspect to the second aspect or the possible designs of the first aspect to the second aspect.

According to an eighth aspect, an embodiment of this application provides another parking payment apparatus, including a processor and a memory. The memory is configured to store a program; and the processor is configured to execute the program stored in the memory, so that the apparatus implements the method according to any one of the third aspect or the possible designs of the third aspect.

According to a ninth aspect, an embodiment of this application provides a computer-readable storage medium. The computer-readable storage medium stores program code. When the program code is run on a computer, the computer is enabled to perform the method according to the first aspect and the possible designs of the first aspect, or when the program code is run on a computer, the computer is enabled to perform the method according to the second aspect and the possible designs of the second aspect, or when the program code is run on a computer, the computer is enabled to perform the method according to the third aspect and the possible designs of the third aspect.

According to a tenth aspect, an embodiment of this application provides a computer program product. When the computer program product runs on a computer, the computer is enabled to perform the method according to the first aspect and the possible designs of the first aspect, or perform the method according to the second aspect and the possible designs of the second aspect, or perform the method according to the third aspect and the possible designs of the third aspect.

According to an eleventh aspect, an embodiment of this application provides a chip system. The chip system includes a processor, configured to invoke a computer program or computer instructions stored in a memory, so that the processor performs the method according to the first aspect and the possible designs of the first aspect, or performs the method according to the second aspect and the possible designs of the second aspect, or performs the method according to the third aspect and the possible designs of the third aspect.

With reference to the eleventh aspect, in a possible implementation, the processor is coupled to the memory through a port.

With reference to the eleventh aspect, in a possible implementation, the chip system further includes the memory. The memory stores the computer program or computer instructions.

According to a twelfth aspect, an embodiment of this application provides a processor. The processor is configured to invoke a computer program or computer instructions stored in a memory, so that the processor performs the method according to the first aspect and the possible designs of the first aspect, or performs the method according to the second aspect and the possible designs of the second aspect, or performs the method according to the third aspect and the possible designs of the third aspect.

Based on the implementations provided in the foregoing aspects, embodiments of this application may be further combined to provide more implementations.

For technical effects that can be achieved by any possible design in any one of the fourth aspect to the twelfth aspect, refer to descriptions of technical effects that can be achieved by any possible design in any one of the first aspect to the third aspect. Repeated parts are not described.

### BRIEF DESCRIPTION OF DRAWINGS

FIG. 1A is a diagram of an architecture of a parking payment system according to an embodiment of this application;
FIG. 1B is a diagram of a structure of a vehicle according to an embodiment of this application;
FIG. 1C is a diagram of an architecture of another parking payment system according to an embodiment of this application;
FIG. 2 is a flowchart of a parking payment method according to an embodiment of this application;
FIG. 3 is a flowchart of another parking payment method according to an embodiment of this application;
FIG. 4 is a flowchart of a method for positioning a parking lot according to an embodiment of this application;
FIG. 5 is a diagram of a display interface according to an embodiment of this application;
FIG. 6 is a diagram of a first interface according to an embodiment of this application;
FIG. 7A and FIG. 7B are a flowchart of a method for uploading a payment link of a parking lot according to an embodiment of this application;
FIG. 8 is a diagram of a second interface according to an embodiment of this application;
FIG. 9 is a diagram of a parking payment apparatus according to an embodiment of this application; and
FIG. 10 is a diagram of another parking payment apparatus according to an embodiment of this application.

### DESCRIPTION OF EMBODIMENTS

To resolve a congestion problem caused by a complex code scanning payment process in a parking lot during peak hours of traffic, a cloud server for storing payment images of each parking lot is proposed in a related technology. In this way, a payment image of the parking lot can be pushed to a terminal device of a vehicle owner before a vehicle leaves the parking lot. However, a payment image stored in an existing cloud server is captured in a manual crowdsourcing manner. Therefore, coverage is low, and the payment image stored in the cloud server cannot be updated in time when a payment image of a parking lot changes or a parking lot is added. Consequently, in some cases, a user cannot obtain the payment image from the cloud, and user experience is poor.

This application provides a parking payment method, apparatus, and system. It is proposed that after a vehicle enters a parking lot, a vehicle-mounted terminal obtains sensing information in a parking lot environment through a collection device of the vehicle, and uploads payment information to a server after a parking fee is successfully paid based on the sensing information. In the solution provided in this application, the vehicle-mounted terminal collects and uploads the payment information that can be used to pay the parking fee. Compared with a manner in which a payment image is manually captured and uploaded in the conventional technology, a manner in the solution provided in this application can effectively improve comprehensiveness of payment information maintained by the server. The method and apparatus are based on a same technical concept. Because problem-resolving principles of the method and apparatus are similar, mutual reference may be made to implementations of the apparatus and method, and repeated descriptions are not described.

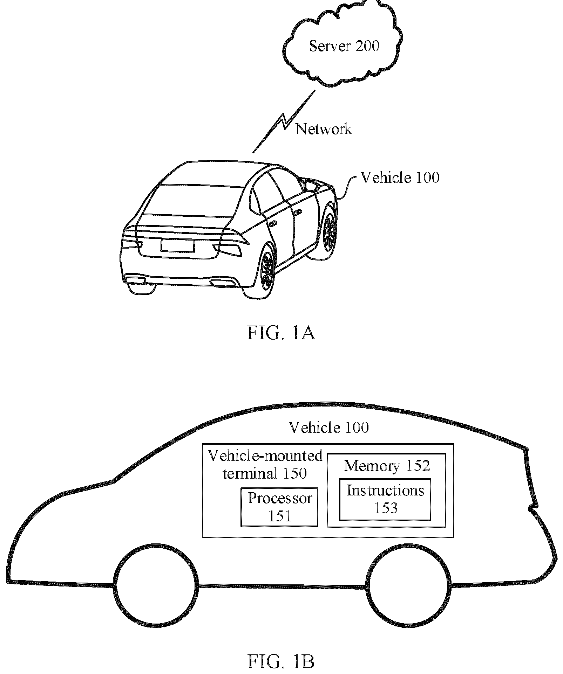

To facilitate understanding of the parking payment solution provided in this application, a system architecture in this application is first described. FIG. 1A is a diagram of an architecture of a parking payment system according to this application. The system shown in FIG. 1A includes a vehicle 100 and a server 200, where the vehicle 100 and the server 200 may communicate with each other through a network.

For example, for a structure of the vehicle 100 included in the system shown in FIG. 1A, refer to FIG. 1B. The vehicle 100 may include a vehicle-mounted terminal 150, and the vehicle-mounted terminal 150 may include at least one processor 151 and a memory 152. Some or all functions of the vehicle 100 are controlled by the vehicle-mounted terminal 150. The vehicle-mounted terminal 150 may also be referred to as a vehicle-mounted controller, a vehicle-mounted module, a vehicle-mounted assembly, a vehicle-mounted component, a vehicle-mounted chip, data terminal equipment (data terminal equipment, DTE), an on-board unit, or the like. The vehicle-mounted terminal 150 may include at least one processor 151. The processor 151 may execute instructions 153 stored in a non-transient computer-readable medium like the memory 152. In some embodiments, the vehicle-mounted terminal 150 may alternatively be a plurality of computing devices that control individual components or subsystems of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system-on-a-chip (system-on-a-chip, SOC), an application-specific integrated circuit (application-specific integrated circuit, ASIC), or a combination thereof.

For example, not shown in FIG. 1B, the vehicle 100 may further include hardware such as a vehicle-mounted radar, a vehicle-mounted camera, an inertial measurement unit (inertial measurement unit, IMU), and a positioning sensor. For example, in addition to the instructions 153, the memory 152 may further store data, such as a road map, route information, a location, a direction, a speed, and other similar vehicle data of the vehicle, and other information. Such information may be used by the vehicle 100 and the vehicle-mounted terminal 150 during operation of the vehicle 100 in an autonomous mode, a semi-autonomous mode, and/or a manual mode. It should be understood that the structure of the vehicle in FIG. 1B should not be understood as a limitation on embodiments of this application.

The system shown in FIG. 1A further includes a server 200. A function of the server 200 may be implemented by using one or more virtual machines or physical computing apparatuses. For example, the server 200 may alternatively be a cloud computing platform or a cloud server. In embodiments of this application, the server 200 may be configured to store a payment image of each parking lot or payment information of each parking lot.

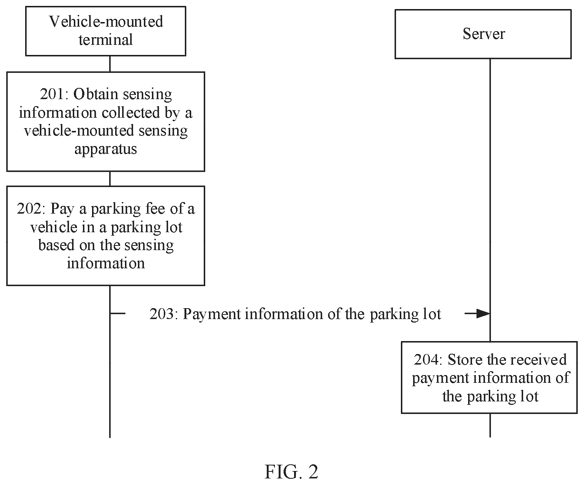

In some scenarios, the parking payment system may further include a terminal device 300 of a vehicle owner. For example, refer to FIG. 1C. FIG. 1C is a diagram of an architecture of another parking payment system according to an embodiment of this application. For example, the terminal device 300 may be configured to pay a parking fee by using payment information of a parking lot, and may return a payment result to the server 200, so that the server 200 determines accuracy of the stored payment information, and maintains a quantity of access times of the stored payment information. For example, the terminal device 300 and the server 200 may communicate with each other through a network.

It should be noted that in embodiments of this application, a term "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit priorities or importance of the plurality of objects. For example, first indication information and second indication information are merely intended to distinguish between different indication information, but do not indicate different priorities, importance, or the like of the two pieces of indication information.

The following describes the solution of this application with reference to the system architecture shown in FIG. 1A or FIG. 1B. FIG. 2 is a flowchart of a parking payment method according to an embodiment of this application. The method may be performed by a carrier (for example, a vehicle), or the method may be performed by a vehicle apparatus, or the method may be performed by a computing platform or a system-on-a-chip (system-on-a-chip, SoC) on a computing platform, or the method may be performed by a processor on a computing platform. In the following, for example, the method procedure shown in FIG. 2 may be implemented by the vehicle-mounted terminal 150 and the server 200 that are included in the system shown in FIG. 1A or FIG. 1B. The method procedure shown in FIG. 2 specifically includes the following steps.

201: A vehicle-mounted terminal obtains sensing information collected by a vehicle-mounted sensing apparatus.

The sensing information collected by the vehicle-mounted sensor is used to determine payment information of a vehicle in a parking lot, namely, information used to pay a parking fee of the parking lot.

Optionally, the vehicle-mounted sensing apparatus may be a collection device of the vehicle, for example, a vehicle-mounted camera of the vehicle, and may include one or more of a front-facing camera of a digital video recorder (digital video recorder, DVR) dashcam and a surround-view camera of an around view monitor (around view monitor, AVM). A type of the vehicle-mounted camera is not limited in this application. For example, the vehicle-mounted camera may be a monocular camera or a binocular camera.

202: The vehicle-mounted terminal pays the parking fee of the vehicle in the parking lot based on the sensing information.

Optionally, the sensing information collected by the vehicle-mounted sensor may be a payment image captured by the vehicle-mounted camera, and the vehicle-mounted terminal may pay the parking fee by scanning the payment image.

203: The vehicle-mounted terminal sends the payment information of the parking lot to a server.

After paying the parking fee, the vehicle-mounted terminal may send the payment information of the parking lot to the server, so that the server manages the payment information of the parking lot. This improves a probability and accuracy of obtaining the payment information of the parking lot by another vehicle from the server, and reduces requirements for and costs of vehicle hardware.

Optionally, the payment information may be information that is obtained based on the sensing information and that is used to pay a parking fee. For example, when the sensing information is a payment image, the payment information may be a payment link, a payment applet, or the like obtained by converting the payment image, or the payment information may be a payment image. In other words, the vehicle-mounted terminal may directly upload the captured payment image to the server, or may convert the captured payment image into payment information such as a payment link or a payment applet, and then upload the payment information to the server.

204: The server stores the received payment information of the parking lot.

In some embodiments, the vehicle-mounted terminal may alternatively not perform the step of paying the parking fee based on the collected sensing information, but directly upload the payment information of the parking lot to the server. In a possible implementation, for example, the collected sensing information is a payment image. The vehicle-mounted terminal may obtain at least one payment image from a video collected by the collection device of the vehicle. In a traveling process of the vehicle, the collection device collects, in real time, a video of an environment in which the vehicle is located. To be specific, after the vehicle enters the parking lot, the collection device collects a video of a parking lot scenario. The vehicle-mounted terminal may obtain the video collected by the collection device, detect each frame of image of the video, and determine that a plurality of frames of images of the video include a payment image, to obtain the at least one payment image. For example, the vehicle-mounted terminal may start, after specified duration after the vehicle enters the parking lot, obtaining the video collected by the collection device, or may start obtaining the video at a moment at which it is determined that the vehicle enters the parking lot, and obtain at least one payment image from the video through parsing. For example, the vehicle-mounted terminal obtains a video of a parking lot environment that is collected by the collection device in a time period that is before the vehicle stops and after specified duration after the vehicle enters the parking lot. Further, the vehicle-mounted terminal may determine the payment information of the parking lot based on the captured payment image, and send the payment information to the server.

In one case, the payment information may include an identifier of the parking lot. Further, the server may parse the payment information to obtain the identifier of the parking lot, and further associate the identifier of the parking lot with the payment information of the parking lot for storage. In another case, when sending the payment information of the parking lot to the server, the vehicle-mounted terminal may send the identifier of the parking lot to the server. Further, when the server receives the payment information of the parking lot and the identifier of the parking lot, the server may associate the identifier of the parking lot with the payment information of the parking lot for storage. In still another case, the vehicle-mounted terminal may further send information about a geographical location in which the vehicle-mounted terminal is currently located to the server. The server determines, based on the information about the geographical location in which the vehicle-mounted terminal is located, an identifier corresponding to the parking lot in which the vehicle-mounted terminal is located, and further associates the payment information of the parking lot with the identifier of the parking lot for storage. This case is described in detail below. Details are not described herein again.

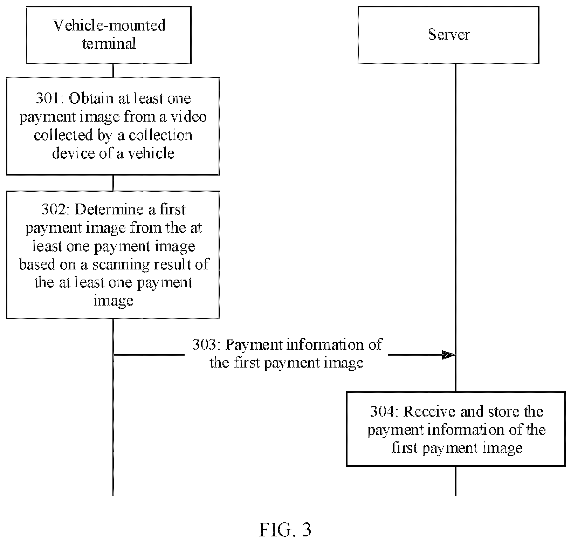

In some possible implementations, to improve accuracy of the payment information stored in the server, before uploading the payment information to the server, the vehicle-mounted terminal may detect the at least one captured payment image to determine the payment image that is capable of being used to pay the parking fee of the parking lot, and upload the payment information corresponding to the determined payment image to ensure accuracy of the payment information maintained in the server. For example, FIG. 3 is a flowchart of another parking payment method according to an embodiment of this application. Optionally, the method procedure shown in FIG. 3 may be performed by a vehicle or a processing apparatus in a vehicle, or the method procedure may be performed by a computing platform, a chip system of a computing platform, or a processor of a computing platform. For example, the method procedure shown in FIG. 3 may be implemented by the vehicle-mounted terminal 150 and the server 200 that are included in the system shown in FIG. 1A. For example, the method procedure shown in FIG. 3 specifically includes the following steps.

301: A vehicle-mounted terminal obtains at least one payment image from a video collected by a collection device of a vehicle.

302: The vehicle-mounted terminal determines a first payment image from the at least one payment image based on a scanning result of the at least one payment image.

The first payment image is a payment image that is in the at least one payment image and that is used to pay a parking fee in a parking lot. For example, the vehicle-mounted terminal may determine, based on the scanning result of the at least one payment image, the first payment image that is in the at least one payment image and that can be used to pay the parking fee.

303: The vehicle-mounted terminal sends payment information of the first payment image to a server.

For example, the payment information of the first payment image may be the first payment image, or may be information such as a payment link or a payment program that is obtained by converting the first payment image.

304: The server receives and stores the payment information of the first payment image.

In a possible implementation, when receiving the payment information of the first payment image, the server may directly store the received payment information. In another possible implementation, when determining that payment information of the parking lot in which the vehicle is located is not stored in a database, the server may store the received payment information of the first payment image. In another possible implementation, when the payment information of the parking lot is stored in the database, the server may further store the payment information of the first payment image when determining that the stored payment information is different from the received payment information of the first payment image.

Based on the foregoing solution, the parking payment method provided in this application no longer completely depends on a manually constructed cloud database, and maintenance and management of the payment information of the parking lot is implemented by using the payment information uploaded by the vehicle-mounted terminal of the vehicle. Compared with a conventional manual creation manner, this manner can effectively improve management efficiency of the payment information of the parking lot. In addition, a coverage area of the payment information of the parking lot managed by the server can be increased, to avoid a problem that user experience is poor because the payment information of the parking lot cannot be updated in time when the payment information of the parking lot is newly added or the payment information of the parking lot changes.

In some possible scenarios, to ensure that the payment image stored in the server is identifiable, there is a high requirement on a resolution of the stored payment image. A payment image with a high resolution occupies large memory space. Consequently, storage costs of an existing server are high. For example, the payment information of the first payment image uploaded by the vehicle-mounted terminal to the server may be a payment link obtained by converting the first payment image. For example, the vehicle-mounted terminal may convert the first payment image into a payment link when determining the first payment image, and upload the payment link to the server. Therefore, transmission efficiency can be improved, storage space of the server can be saved, and storage costs of the server can be reduced. In some embodiments, when the vehicle-mounted terminal uploads the payment image, after receiving the payment image, the server may convert the payment image into a payment link for storage.

For ease of description, an example in which payment information of each parking lot stored in the server is a payment link of each parking lot is used for description below.

In some embodiments, before capturing the payment image, the vehicle-mounted terminal may further first request a payment link of the parking lot from the server. If the payment link can be requested, the vehicle-mounted terminal may pay a parking fee based on the requested payment link. If the payment link is not requested, for example, when the server cannot determine security of the vehicle-mounted terminal and refuses to provide the payment link, or the server does not store the payment link, the vehicle-mounted terminal may perform a payment image capturing procedure.

In an example, the vehicle-mounted terminal may send a first request to the server when determining that the vehicle enters the parking lot, or after determining specified duration for which the vehicle enters the parking lot. The first request is used to request a payment link of a parking lot in which the vehicle is located, and the first request carries a first geographical location in which the vehicle is currently located. For example, the server may determine, based on the first geographical location, the parking lot in which the vehicle is located, and retrieve the payment link of the determined parking lot from the database. If the server finds the payment link of the parking lot, the server may send a search result to a terminal device of a vehicle owner, to pay the parking fee. If the server does not find the payment link of the parking lot, the server may return a first response to the vehicle-mounted terminal, to indicate the vehicle-mounted terminal to collect a payment link in a parking lot environment. Further, after receiving the first response, the vehicle-mounted terminal may continue to perform the steps shown in FIG. 2 or FIG. 3. In another example, before the vehicle-mounted terminal enters the parking lot and a distance from the vehicle-mounted terminal to the to-be-entered parking lot is less than a specific distance, the vehicle-mounted terminal may send a geographical location of the vehicle-mounted terminal to the server, and send a traveling direction of the vehicle to the server. Currently, positioning precision of a global positioning system (global positioning system, GPS) can reach only a meter level. Therefore, when a parking lot in which a vehicle is located is determined based on only a geographical location, an error may exist. Consequently, an error rate is high when the server retrieves payment information based on the determined parking lot. Especially in a business district in which parking lots are densely distributed, such a positioning error may cause the server to send incorrect payment information to a terminal device of a vehicle owner, thereby reducing user experience. In this embodiment of this application, before the vehicle enters the parking lot, the vehicle-mounted terminal not only sends the geographical location in which the vehicle-mounted terminal is currently located to the server, but also sends the traveling direction of the vehicle to the server. After entering the parking lot, the vehicle-mounted terminal sends the geographical location obtained after entering the parking lot to the server. Therefore, the server may determine, with reference to the geographical location and the driving direction of the vehicle before the vehicle enters the parking lot and the geographical location of the vehicle after the vehicle enters the parking lot, a parking lot in which the vehicle is located, and then search the database for a payment link of the determined parking lot, to reduce impact of a positioning error on payment information retrieval. This improves search accuracy. For ease of differentiation, a geographical location in which the vehicle is located before entering the parking lot is referred to as a second geographical location for short, and a geographical location in which the vehicle is located after entering the parking lot is referred to as a first geographical location. The first geographical location is carried in the first request and sent to the server.

In a possible implementation, before sending the second geographical location to the server, the vehicle-mounted terminal may first determine whether a parking lot exists in a range within which a distance from the vehicle is less than a first distance threshold. If the parking lot exists, the vehicle-mounted terminal may obtain the traveling direction of the vehicle and the second geographical location, for example, the vehicle-mounted terminal may determine the traveling direction of the vehicle and the second geographical location of the vehicle by using data collected by hardware such as an IMU and a positioning sensor that are configured in the vehicle and a steering wheel angle.

The following describes, by using an example, a manner in which the server determines, based on the second geographical location, the traveling direction of the vehicle, and the first geographical location, a parking lot that the vehicle is to enter.

After receiving the second geographical location and the traveling direction of the vehicle, and before receiving the first geographical location, the server may predict the parking lot that the vehicle is to enter. For example, the server may determine, based on the received second geographical location, at least one parking lot within a range whose distance from the second geographical location is less than a first distance threshold. Further, the server may predict, from the at least one parking lot based on the received traveling direction of the vehicle, a parking lot that the vehicle is to enter. After determining that the vehicle enters the parking lot, the vehicle-mounted terminal sends the first geographical location in which the vehicle is currently located to the server. After receiving the first geographical location, the server may determine, based on the first geographical location and the predicted parking lot, a parking lot in which the vehicle is actually located.

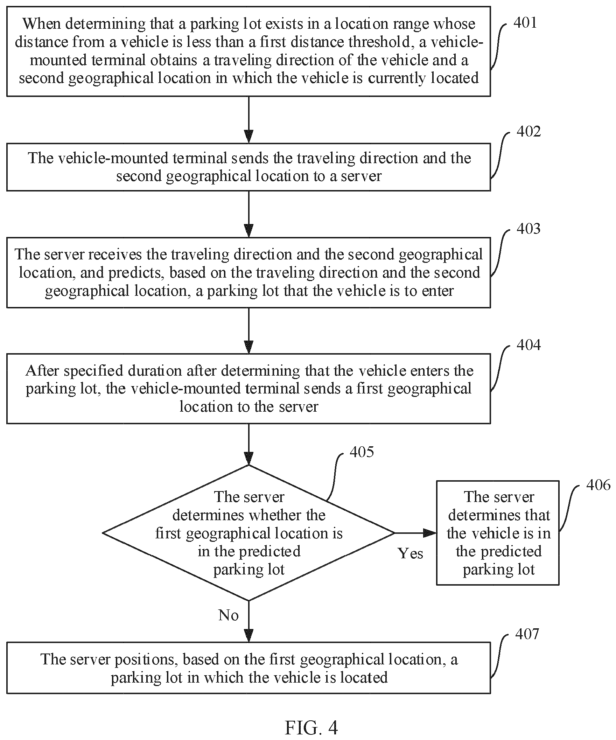

To facilitate understanding of the solution for accurately locating a parking lot in which the vehicle is located provided in this application, the following describes the solution with reference to specific embodiments. FIG. 4 is a flowchart of a method for positioning a parking lot according to this application. The positioning method may be implemented by a server based on location information of a vehicle that is uploaded by an apparatus like a vehicle-mounted terminal, a vehicle-mounted processor, or a vehicle-mounted sensor. Optionally, the positioning method may be performed by a server, a server cluster, a cloud server, a computing platform, or a processing apparatus in a computing platform. For example, in FIG. 4, an example in which a server and a vehicle-mounted terminal are used as execution bodies is used for description. A method procedure shown in FIG. 4 specifically includes the following steps.

401: When determining that a parking lot exists in a location range whose distance from a vehicle is less than a first distance threshold, a vehicle-mounted terminal obtains a traveling direction of the vehicle and a second geographical location in which the vehicle is currently located.

For example, the vehicle-mounted terminal may determine, based on data collected by hardware such as an IMU and a positioning sensor of the vehicle and a rotation angle of a steering wheel of the vehicle, the traveling direction of the vehicle and the second geographical location in which the vehicle is currently located.

In an optional manner, the vehicle-mounted terminal may further obtain a traveling speed of the vehicle, and may start to obtain the traveling direction and the second geographical location of the vehicle when a parking lot exists in a location range in which the traveling speed of the vehicle is less than a speed threshold and a distance from the vehicle is less than a first distance threshold. For example, the vehicle-mounted terminal may further obtain gear information of the vehicle by using a vehicle hardware service (vehicle hardware service, VHS) of the vehicle, to predict the traveling speed of the vehicle.

402: The vehicle-mounted terminal sends the traveling direction and the second geographical location to a server.

403: The server receives the traveling direction and the second geographical location, and predicts, based on the traveling direction and the second geographical location, a parking lot that the vehicle is to enter.

For example, for a specific prediction process, refer to the descriptions in the foregoing embodiment. Details are not described herein again.

404: After specified duration after determining that the vehicle enters the parking lot, the vehicle-mounted terminal sends a first geographical location to the server.

In an optional manner, when determining that the vehicle enters the parking lot, the vehicle-mounted terminal may send the first geographical location in which the vehicle is currently located to the server. In another optional manner, after the specified duration after determining that the vehicle enters the parking lot, the vehicle-mounted terminal may send the first geographical location in which the vehicle is currently located to the server.

405: The server determines whether the first geographical location is in the predicted parking lot.

If the first geographical location is in the predicted parking lot, step 406 is performed.

If the first geographical location is not located in the predicted parking lot, step 407 is performed.

406: The server determines that the vehicle is in the predicted parking lot.

407: The server positions, based on the first geographical location, a parking lot in which the vehicle is located.

Optionally, the server may calculate a distance between each parking lot and the first geographical location, and use a closest parking lot as the parking lot in which the vehicle is located.

Based on the foregoing solution, in this application, the parking lot in which the vehicle is located is no longer simply determined based on the location of the vehicle after entering the parking lot, but the parking lot that the vehicle is to enter is predicted based on the geographical location and the traveling direction of the vehicle before entering the parking lot, and the parking lot in which the vehicle is located is jointly determined based on the predicted parking lot and the location of the vehicle after entering the parking lot. According to the solutions of this application, a problem of a parking lot positioning error caused by insufficient positioning precision can be avoided, and accuracy of parking lot positioning can be improved.

In some embodiments, when performing step 404 in FIG. 4, the vehicle-mounted terminal may determine, based on a traveling condition of the vehicle, that the vehicle enters the parking lot. For example, the vehicle-mounted terminal may determine that the vehicle enters the parking lot when identifying that the vehicle meets at least one of the following conditions:
a strength of a communication signal of the vehicle-mounted terminal is less than a strength threshold, a speed of the vehicle is less than a speed threshold, a distance between the geographical location in which the vehicle is currently located and a geographical location of an entrance of the parking lot is less than a distance threshold, and it is detected that a video collected by a collection device includes a sign of the parking lot. For example, the vehicle-mounted terminal may determine, based on the conditions: a strength of a GPS signal is less than the strength threshold, a speed of the vehicle is reduced to be less than the speed threshold, and a distance between an application programming interface (application programming interface, API) corresponding to the vehicle on a map and the entrance of the parking lot is less than the distance threshold, and when a parking pole, a parking space, or another parking lot sign of the parking lot is identified in the video collected by the collection device, that the vehicle enters the parking lot.

In some embodiments, when the server retrieves a payment link of the parking lot from a database based on a positioning result of the parking lot, if the payment link is retrieved, the server may feed back a retrieval result to a terminal device of a vehicle owner. If the payment link is not retrieved, a first response may be fed back to the vehicle-mounted terminal, to indicate the vehicle-mounted terminal to upload the payment link. The following describes, with reference to a specific scenario, a process in which the server performs retrieval and feeds back a retrieval result.

### Scenario 1: Retrieval of the payment link succeeds.

For example, it can be learned from step 405 in FIG. 4 that when the server positions the parking lot, there are two cases: a prediction success and a prediction failure. The following separately describes retrieval processes in the two cases.

### Case 1: The prediction is successful.

When determining that the vehicle is in a predicted parking lot, the server may retrieve a payment link of the predicted parking lot from the database based on an identifier of the predicted parking lot. For example, when retrieving the payment link of the predicted parking lot, the server may send the retrieved payment link to the terminal device of the vehicle owner or the vehicle-mounted terminal, to pay a parking fee. For example, the payment link is sent to the terminal device of the vehicle owner. When receiving the payment link, the terminal device may convert the payment link into a payment image, and display the payment image on a display, so that the vehicle owner pays a parking fee before leaving the parking lot.

### Case 2: The prediction fails.

When determining that the vehicle is not in a predicted parking lot, the server may determine at least one candidate parking lot based on the first geographical location, where a distance between an entrance of any one of the at least one candidate parking lot and the first geographical location is less than a second distance threshold. Further, the server may retrieve a corresponding payment link from the database based on an identifier of each candidate parking lot. When retrieving a payment link of the at least one candidate parking lot, the server may send the payment link to the terminal device of the vehicle owner based on a quantity of access times of the payment link of each candidate parking lot and a distance between an entrance location of each candidate parking lot and the first geographical location.

For example, it is assumed that a quantity of candidate parking lots determined by the server is N. When payment links of M candidate parking lots in the N candidate parking lots are retrieved from the database of the server, the server separately determines confidence of the M candidate parking lots. M is an integer greater than 2, and N is an integer greater than or equal to M. Further, P candidate parking lots may be determined from the M candidate parking lots based on the confidence of the M candidate parking lots. The server may send payment links of the P candidate parking lots to the terminal device of the vehicle owner.

For a first candidate parking lot in the M candidate parking lots, when confidence of the first candidate parking lot is calculated, the confidence of the first candidate parking lot may be determined based on a distance between an entrance of the first candidate parking lot and the first geographical location and a quantity of access times of a payment link of the first candidate parking lot stored in the database. P is an integer less than or equal to M. The P candidate parking lots may be P candidate parking lots with highest confidence in the M candidate parking lots. Confidence of each of the P candidate parking lots is greater than confidence of M-P candidate parking lots other than the P candidate parking lots in the M candidate parking lots. A value of P may be preset, or may be determined based on a value of M. In some implementations, a confidence threshold may be preconfigured, so that the P candidate parking lots whose confidence is greater than the confidence threshold are selected from the M candidate parking lots based on the confidence of the M candidate parking lots.

For example, the terminal device may convert received P payment links into payment images and scan the payment links one by one, and a license plate number of the vehicle is input. A payment image that can generate accurate parking information of the vehicle is determined and displayed on a display of the terminal device, so that the vehicle owner pays a parking fee.

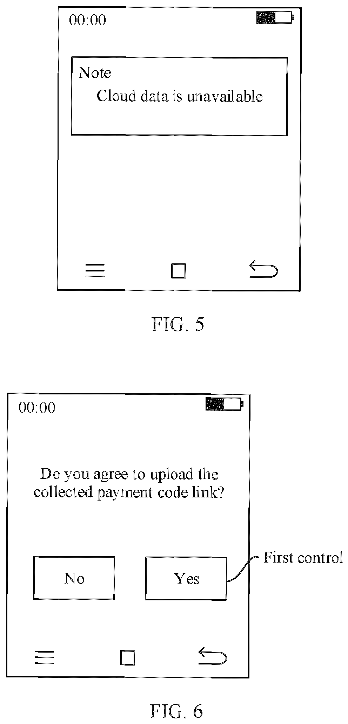

In some embodiments, when sending the payment links of the P candidate parking lots to the terminal device of the vehicle owner, the server may further synchronously send confidence of the payment links of the P candidate parking lots to the terminal device. For example, the terminal device may obtain P payment images based on the P payment links, scan the P payment images one by one in descending order of confidence, and the license plate number of the vehicle is input. In a possible case, when the terminal device of the vehicle owner determines that there is no payment image that is capable of being used to pay a parking fee of a parking lot in which the vehicle is located in the P payment images, the terminal device of the vehicle owner may send, to the server, indication information indicating a push error. For example, the terminal device may further display, on the display, information indicating that the server cannot obtain a payment link of the parking lot, to inform the vehicle owner that a payment image in a parking lot environment needs to be manually collected to pay a parking fee. In an example, when determining that none of a plurality of payment links from the server is available, the terminal device may display a display interface shown in FIG. 5.

In another possible case, if the P payment images include a payment image that is capable of being used to pay the parking fee of the parking lot in which the vehicle is located, the terminal device of the vehicle owner may display the determined payment image on the display, so that the vehicle owner pays the parking fee before the vehicle leaves the parking lot.

### Scenario 2: Retrieval of the payment link fails.

When the server fails to retrieve the payment link of the parking lot based on a positioning result of the parking lot, the server may return a first response to the vehicle-mounted terminal, to indicate the vehicle-mounted terminal to obtain and upload a payment link of a parking lot in which the vehicle is located. For ease of description, the payment link of the parking lot in which the vehicle is located is referred to as a first payment link for short subsequently. For example, for a process in which the vehicle-mounted terminal obtains and uploads the first payment link, refer to FIG. 2 or FIG. 3.

In some embodiments, when receiving the first response, the vehicle-mounted terminal may start steps of obtaining a payment image and uploading the payment link after requesting user authorization. For example, the vehicle-mounted terminal may display a first interface on the display. The first interface includes a first control, and the first control is used to request whether to allow sending the payment link of the parking lot in which the vehicle is located to the server. In an example, FIG. 6 is a diagram of the first interface according to this application. Further, the vehicle-mounted terminal may send the first payment link to the server in response to an operation that is performed by a user on the first control and that allows sending the first payment link to the server.

For example, after obtaining the user authorization, the vehicle-mounted terminal may obtain at least one payment image from a video collected by a collection device of the vehicle, determine, from the at least one payment image, a first payment image used to pay a parking fee of the parking lot, convert the first payment image into a first payment link, and upload the first payment link to the server.

For example, when performing step 201 in FIG. 2 or step 301 in FIG. 3 to obtain the at least one payment image, the vehicle-mounted terminal may detect whether there is a payment code in each frame of image included in the video. If there is a payment code in any frame of image, the frame of image is used as one payment image. A collection device configured in an existing vehicle generally includes a front-facing camera of a DVR dashcam and a surround-view camera of an AVM. Due to limitations of resolution and a field of view (field of angle, FOV) of the two types of cameras, resolution of a captured image is low and the image is severely deformed, and it is difficult to detect an available payment image from the image. Based on this, in this application, when it is detected that the video includes a to-be-captured payment image, a distance between the vehicle and the to-be-captured payment image is determined, a zoom ratio of the collection device is adjusted based on the determined distance, and a payment image captured after the collection device adjusts the zoom ratio is obtained. For example, when detecting that there is a payment code in a latest frame of image of the obtained video, the vehicle-mounted terminal may adjust the zoom ratio of the collection device, to improve resolution of the payment image captured by the collection device and avoid deformation of the captured payment image.

In some embodiments, after obtaining the at least one payment image from the video, that is, after performing step 301 and before performing step 302, the vehicle-mounted terminal may further use an artificial intelligence image enhancement algorithm to reduce image noise and improve image definition, for example, may use an algorithm like mean filtering or median filtering.

In some scenarios, some QR code images that are not parking lot payment images may exist in a parking lot environment. For example, an advertisement QR code or a phishing QR code that is illegally set. Therefore, to ensure accuracy of the payment link uploaded by the vehicle-mounted terminal, the vehicle-mounted terminal may further perform step 302 in FIG. 3 before uploading the payment link, that is, determine, from the obtained at least one payment image, the first payment image used to pay the parking fee of the parking lot. For example, the vehicle-mounted terminal may determine the first payment image in the following manner.

In some embodiments, the vehicle-mounted terminal may scan a captured payment image, and determine that a scanning result includes a control used to input a license plate number of the vehicle. In some other embodiments, when determining that the scanning result includes the control used to input the license plate number of the vehicle, the vehicle-mounted terminal may further determine that parking record information of the vehicle in the parking lot, for example, information such as entry time and parking duration of the vehicle, can be generated by typing the license plate number of the vehicle into the control.

Further, to ensure security of the payment image, in some embodiments, when determining that the scanning result includes the control used to input the license plate number of the vehicle, and determining that the parking record information of the vehicle in the parking lot can be generated by typing the license plate number of the vehicle into the control, the vehicle-mounted terminal may further determine that a time difference between time at which the vehicle enters the parking lot in the generated parking information and stored time at which the vehicle enters the parking lot is less than a specified threshold. The stored time may be time at which the vehicle-mounted terminal determines that the vehicle enters the parking lot. In other words, when determining that the vehicle enters the parking lot, the vehicle-mounted terminal may store a current moment. It is known that time that can be identified in the illegal phishing QR code and at which the vehicle enters the parking lot is randomly generated. Therefore, in this application, the time is recorded when the vehicle enters the parking lot, and the illegal phishing QR code is removed by comparing the recorded time with the time generated in the scanning result, so as to determine the first payment image accurately used to pay the parking fee.

Based on the foregoing embodiment, it may be determined that the first payment image obtained by the vehicle-mounted terminal meets the following.

The scanning result of the first payment image includes the control used to input the license plate number of the vehicle. Alternatively, the scanning result of the first payment image includes the control used to input the license plate number of the vehicle, and the parking record information of the vehicle in the parking lot is generated when the stored license plate number of the vehicle is input into the control. Alternatively, the scanning result of the first payment image includes the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in the vehicle-mounted terminal is less than a specified threshold.

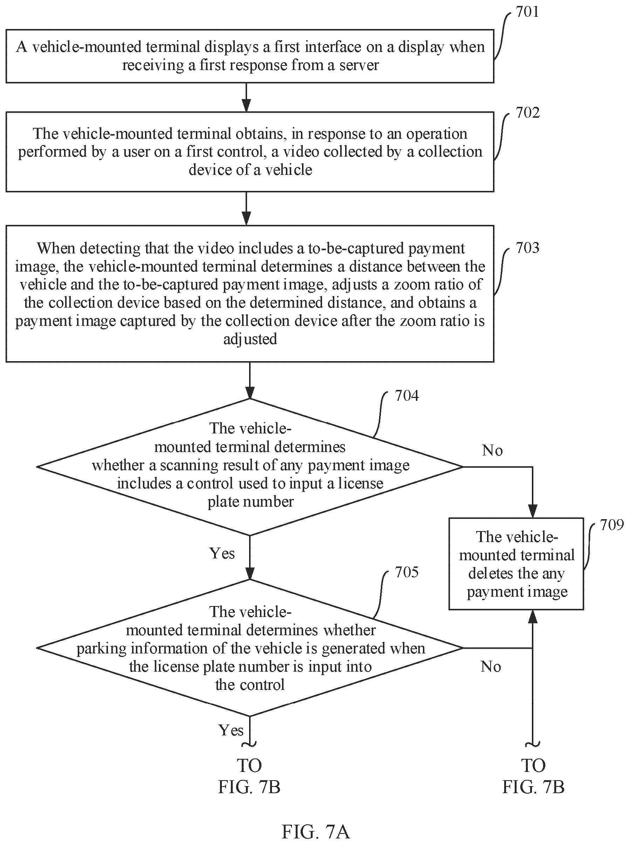

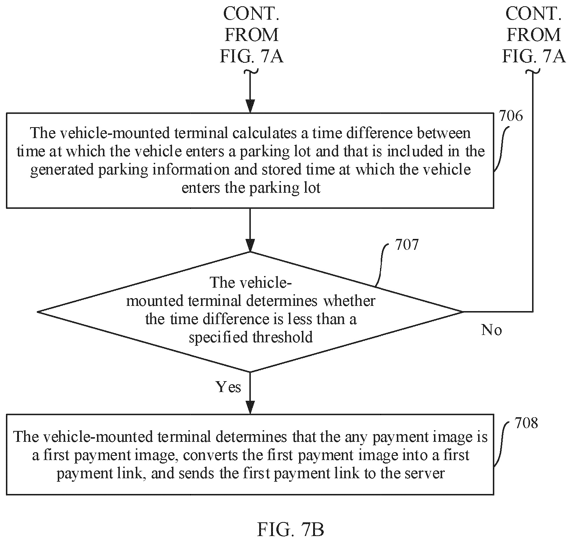

With reference to specific embodiments, the following describes a process in which the vehicle-mounted terminal captures a payment image and uploads a payment link according to this application. FIG. 7A and FIG. 7B are a flowchart of a method for uploading a payment link of a parking lot according to this application. Optionally, the method procedure may be performed by a carrier like a vehicle, or the method procedure may be performed by a vehicle-mounted terminal or another vehicle-mounted processor, or the method procedure may be performed by a computing platform or an apparatus like a chip system or a processor in a computing platform. For example, in FIG. 7A and FIG. 7B, an example in which a vehicle-mounted terminal is used as an execution body is used for description, and specifically includes the following steps.

701: The vehicle-mounted terminal displays a first interface on a display when receiving a first response from a server.

The first response indicates that the server fails to retrieve a payment link of a parking lot in which a vehicle is located. The first interface includes a first control, and the first control is used to request whether to allow sending a first payment link to the server. In an example, for the first interface, refer to FIG. 6.

702: The vehicle-mounted terminal obtains, in response to an operation performed by a user on the first control, a video collected by a collection device of the vehicle.

The operation performed by the user on the first control is an operation of allowing sending the first payment link to the server.

703: When detecting that the video includes a to-be-captured payment image, the vehicle-mounted terminal determines a distance between the vehicle and the to-be-captured payment image, adjusts a zoom ratio of the collection device based on the determined distance, and obtains a payment image captured by the collection device after the zoom ratio is adjusted.

For example, after obtaining at least one payment image, the vehicle-mounted terminal may further optimize the obtained at least one payment image by using a preset image enhancement algorithm.

704: The vehicle-mounted terminal determines whether a scanning result of any payment image includes a control used to input a license plate number.

If the scanning result includes the control used to input the license plate number, step 705 continues to be performed.

If the scanning result does not include the control used to input the license plate number, step 709 continues to be performed.

705: The vehicle-mounted terminal determines whether parking information of the vehicle is generated when the license plate number is input into the control.

If the parking information of the vehicle is generated when the license plate number is input into the control, step 706 continues to be performed.

If the parking information of the vehicle is not generated when the license plate number is input into the control, step 709 continues to be performed.

706: The vehicle-mounted terminal calculates a time difference between time at which the vehicle enters the parking lot and that is included in the generated parking information and stored time at which the vehicle enters the parking lot.

707: The vehicle-mounted terminal determines whether the time difference is less than a specified threshold.

If the time difference is less than the specified threshold, step 708 continues to be performed.

If the time difference is not less than the specified threshold, step 709 continues to be performed.

708: The vehicle-mounted terminal determines that the any payment image is a first payment image, converts the first payment image into the first payment link, and sends the first payment link to the server.

For example, the vehicle-mounted terminal may further encrypt the first payment link and account information of a vehicle owner by using a preset key, and upload encrypted data to the server. This further improves data transmission security.

709: The vehicle-mounted terminal deletes the any payment image.

Based on the foregoing solution, to ensure that the captured payment image is identifiable, in this application, a clear payment image is obtained by adjusting a zoom ratio of the collection device. In addition, this application further proposes a manner in which the vehicle-mounted terminal scans obtained payment images one by one and compares parking information, to improve accuracy and security of the payment link uploaded to the server.

The foregoing separately describes, with reference to Scenario 1 and Scenario 2, specific execution steps in the two scenarios in which the server successfully retrieves the payment link and the server fails to retrieve the payment link. In some scenarios, the server may further maintain and manage the payment link stored in the database. In a possible case, as described in FIG. 2 in the foregoing embodiment, the vehicle-mounted terminal sends the payment link to the server after successfully paying the parking fee by using the payment image. In this case, the server may maintain and manage the stored payment link based on the payment link from the vehicle-mounted terminal. For example, if the server determines that the payment link uploaded by the vehicle-mounted terminal after payment succeeds is stored in the database, the server may update a quantity of access times of the stored payment link.

In another possible case, as described in FIG. 3 in the foregoing embodiment, after capturing the payment image, the vehicle-mounted terminal does not pay the parking fee, but directly uploads the payment information to the server. In this case, the server may maintain and manage the stored payment link based on information fed back by the terminal device of the vehicle owner after the payment succeeds. The following specifically describes a process in which the server maintains and manages the payment link based on the information fed back by the terminal device of the vehicle owner.

In some embodiments, when successfully paying a parking fee by using the payment link from the server, the terminal device of the vehicle owner may send, to the server, indication information indicating that payment succeeds. For ease of description, a payment image in which the terminal device successfully pays is referred to as a second payment image for short subsequently.

For example, when successfully paying the parking fee by using the second payment image, the terminal device may generate the indication information indicating that payment succeeds, and send, to the server, the indication information and a second payment link obtained by converting the second payment image. For example, the server may receive the indication information and the second payment link, and may update a quantity of access times of the stored second payment link based on the indication information. For example, if the quantity of access times of the second payment link before update is 1, the quantity of access times of the second payment link may be updated to 2 based on the indication information.

In an optional manner, when determining, based on the indication information, the second payment link that can be used to pay the parking fee, the server may send, to the vehicle-mounted terminal that uploads the second payment link, feedback information indicating that the second payment link is accurate. For example, if a vehicle-mounted terminal A and a vehicle-mounted terminal B upload two different payment links for a same parking lot, that is, the vehicle-mounted terminal A uploads a payment link A, and the vehicle-mounted terminal B uploads a payment link B (for a specific uploading step, refer to related descriptions in Scenario 2, and details are not described herein again), the server may store the two payment links, and set quantities of access times of the two payment links to 0. Further, when receiving the indication information indicating that the parking fee of the parking lot is successfully paid by using the payment link A, the server may send feedback information to the vehicle-mounted terminal A, and set the quantity of access times of the payment link A to 1.

In some embodiments, the server may further periodically manage the stored payment link. For example, expiration processing may be performed on each payment link based on a quantity of access times and latest access time of the payment link of each parking lot that are stored in the database. In a possible implementation, the server may obtain, at a specified interval, a quantity of access times and latest access time of any one of a plurality of stored payment links. If it is determined that a time difference between a latest access time point of the any payment link and a current moment is greater than a time threshold, and that a quantity of access times of the any payment link is less than a quantity-of-times threshold, the any payment link may be used as an expired payment link. Further, the server may delete the expired payment link from the plurality of payment links. Periodically clearing the expired payment link can not only reduce storage costs of the server, but also reduce maintenance costs of the server.

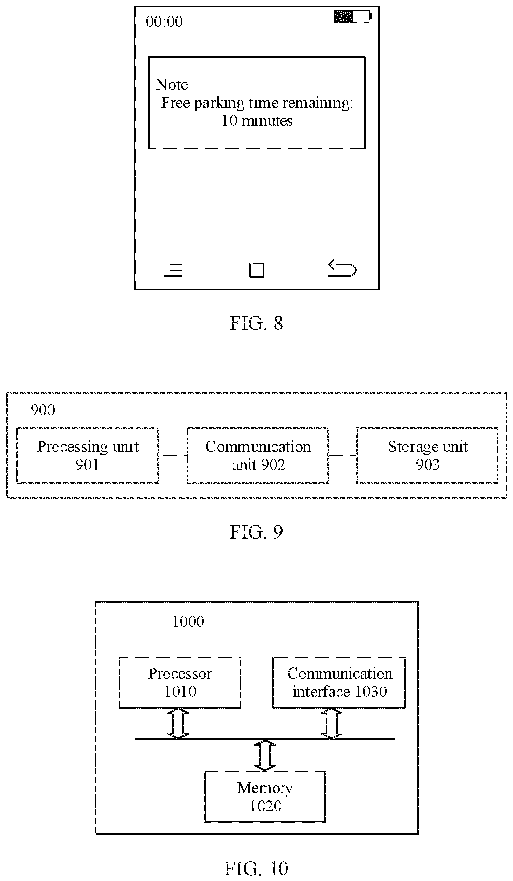

In some scenarios, further in this application, parking time of the vehicle may be monitored, and the vehicle owner is prompted when the parking time is about to exceed the free parking time. For example, the terminal device of the vehicle owner may record entry time of the vehicle when the vehicle enters the parking lot. After the vehicle enters the parking lot, the terminal device may calculate a time difference between a current moment and the entry time in real time, and may display a second interface on the display when a difference between the calculated time difference and the free parking time of the parking lot is less than a preset value. The second interface includes the difference between the calculated time difference and the free parking time of the parking lot, for reminding the user that the parking time is about to exceed the free parking time. In an example, FIG. 8 is a diagram of the second interface according to this application.

An embodiment of this application further provides a parking payment apparatus, configured to perform the steps in the foregoing method. For related features, refer to the descriptions in the foregoing embodiments. Details are not described herein again. As shown in FIG. 9, a parking payment apparatus 900 may include a processing unit 901, a communication unit 902, and a storage unit 903.

In a possible scenario,
the processing unit 901 is configured to obtain sensing information collected by a vehicle-mounted sensing apparatus, where the sensing information is used to determine payment information of a parking lot in which a vehicle is located.

The processing unit 901 is further configured to: after paying a parking fee of the vehicle in the parking lot based on the sensing information, send the payment information of the parking lot to a server through the communication unit 902.

In some embodiments, the sensing information includes a payment image captured by the vehicle in the parking lot; and the processing unit 901 is further configured to:
determine a first payment image from payment images captured by the vehicle in the parking lot, where the first payment image is an image that is capable of being used to pay the parking fee of the vehicle in the parking lot.

The processing unit 901 is specifically configured to:
after paying the parking fee of the vehicle in the parking lot based on the first payment image, send the payment information related to the first payment image of the parking lot to the server through the communication unit 902.

In some embodiments, the communication unit 902 is further configured to:
send a first request to the server after the vehicle enters the parking lot, where the first request is used to request the payment information of the parking lot; and
receive a first response returned by the server, where the first response indicates that the server is not capable of providing the payment information of the parking lot.

In some embodiments, the vehicle-mounted sensing apparatus includes a collection device configured to collect a traveling video; and the processing unit 901 is specifically configured to:
when it is detected that the video collected by the collection device includes a to-be-captured payment image, determine a distance between the vehicle and the to-be-captured payment image; and
adjust a zoom ratio of the collection device based on the distance, and obtain a payment image captured by the collection device after the zoom ratio is adjusted.

In some embodiments, before the vehicle enters the parking lot, the processing unit 901 is further configured to:
obtain a traveling direction of the vehicle and a geographical location in which the vehicle is currently located; and
send the traveling direction of the vehicle and the geographical location in which the vehicle is currently located to the server through the communication unit 902.

The traveling direction of the vehicle and the geographical location of the vehicle are used by the server to retrieve the payment information of the parking lot.

In some embodiments, the processing unit 901 is specifically configured to:
separately scan the payment images captured in the parking lot, and determine a control that is included in a scanning result and that is used to input a license plate number of the vehicle; and
determine, based on parking record information generated when the stored license plate number of the vehicle is input into the control, the first payment image from the payment images captured in the parking lot.

**In** some embodiments, a scanning result of the first payment image includes the control used to input the license plate number of the vehicle.

**In** some embodiments, a scanning result of the first payment image includes the control used to input the license plate number of the vehicle, and the parking record information of the vehicle in the parking lot is generated when the stored license plate number of the vehicle is input into the control.

**In** some embodiments, a scanning result of the first payment image includes the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

**In** some embodiments, the processing unit 901 is further configured to:
when it is recognized that the vehicle meets one or more of the following conditions, determine that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that the video collected by the collection device includes a parking sign of the parking lot.

**In** some embodiments, the processing unit 901 is further configured to:
display a first interface on a display, where the first interface includes a first control, and the first control is used to request whether to allow sending the payment information to the server; and
indicate the communication unit 902 to send the payment information to the server in response to an operation that is performed by a user on the first control and that allows sending the payment information to the server.

**In** another possible scenario,
the communication unit 902 is configured to receive payment information that is sent by a vehicle-mounted terminal of a vehicle and that is of a parking lot in which the vehicle is located, where the payment information is used to pay a parking fee of the parking lot.

The storage unit 903 is configured to store the payment information of the parking lot.

**In** some embodiments, the apparatus further includes the processing unit 901.

The communication unit 902 is further configured to receive a first request from the vehicle-mounted terminal, where the first request is used to request the payment information of the parking lot, and the first request carries a first geographical location in which the vehicle is currently located.

The processing unit 901 is configured to: determine, based on the first geographical location, the parking lot in which the vehicle is located, and when determining that the payment information of the parking lot is not capable of being provided, return a first response to the vehicle-mounted terminal through the communication unit 902.

**In** some embodiments, before receiving the first request from the vehicle-mounted terminal, the communication unit 902 is further configured to receive a second geographical location in which the vehicle is located before the vehicle enters the parking lot and a traveling direction of the vehicle that are sent by the vehicle-mounted terminal, where a distance between the second geographical location and the parking lot is less than a first distance threshold.

The processing unit 901 is further configured to: obtain at least one parking lot within a specified range of the second geographical location, and predict, from the at least one parking lot based on the traveling direction of the vehicle, a parking lot that the vehicle is to enter.

When determining that the payment information of the parking lot is not capable of being provided, the processing unit 901 is specifically configured to:
when the first geographical location is in the predicted parking lot, retrieve no payment information of the predicted parking lot from the database; or
when the first geographical location is outside the predicted parking lot, determine at least one candidate parking lot based on the first geographical location; and retrieve no payment information of any one of the at least one candidate parking lot from the database, where a distance between an entrance of the any one of the at least one candidate parking lot and the first geographical location is less than a second distance threshold.

**In** some embodiments, a quantity of candidate parking lots is N, and the processing unit 901 is further configured to:
when retrieving payment information of M candidate parking lots in the N candidate parking lots from the database, determine confidence of the M candidate parking lots, where M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determine at least one candidate parking lot from the M candidate parking lots based on the confidence of the M candidate parking lots, and indicate the communication unit 902 to send payment information of the at least one candidate parking lot to a terminal device of a vehicle owner.

In some embodiments, the payment information is sent by the vehicle-mounted terminal after the parking fee of the vehicle in the parking lot is paid, and the processing unit 901 is further configured to:
when determining that the payment information of the parking lot is stored in the database, update a quantity of access times of the payment information stored in the storage unit 903.

In some embodiments, the processing unit 901 is further configured to:
obtain a quantity of access times and latest access time of each of a plurality of pieces of stored payment information;
determine expired payment information in the plurality of pieces of payment information, where a time difference between latest access time of the expired payment information and a current moment is greater than a time threshold, and a quantity of access times of the expired payment information is less than a quantity-of-times threshold; and
delete the expired payment information.

It should be noted that unit division in embodiments of this application is an example, and is merely logical function division. In an actual implementation, there may be another division manner. In addition, functional units in this embodiment of this application may be integrated into one processing unit 901, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

In a simple embodiment, a person skilled in the art may figure out that the parking payment apparatus in the foregoing embodiments may be in a form shown in FIG. 10.

An apparatus 1000 shown in FIG. 10 includes at least one processor 1010 and a memory 1020, and optionally, may further include a communication interface 1030.

In this embodiment of this application, a specific connection medium between the processor 1010 and the memory 1020 is not limited.

The apparatus in FIG. 10 further includes the communication interface 1030. When communicating with another device, the processor 1010 may perform data transmission through the communication interface 1030.

When the parking payment apparatus is in the form shown in FIG. 10, the processor 1010 in FIG. 10 may invoke computer-executable instructions stored in the memory 1020, so that the apparatus 1000 can perform the method performed by the parking payment apparatus in any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through a port.

In a possible implementation, the chip system further includes a memory. The memory stores a computer program or computer instructions.

An embodiment of this application further relates to a processor. The processor is configured to invoke a computer program or computer instructions stored in a memory, so that the processor performs the method according to any one of the foregoing embodiments.

It should be understood that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A parking payment method, wherein the method comprises:
obtaining sensing information collected by a vehicle-mounted sensing apparatus, wherein the sensing information is used to determine payment information of a parking lot in which a vehicle is located; and
sending the payment information of the parking lot to a server after paying a parking fee of the vehicle in the parking lot based on the sensing information.

2. The method according to claim 1, wherein the sensing information comprises at least one payment image captured by the vehicle in the parking lot, and the method further comprises:
determining a first payment image from the at least one payment image captured by the vehicle in the parking lot, wherein the first payment image is an image that is capable of being used to pay the parking fee of the vehicle in the parking lot; and
the sending the payment information of the parking lot to a server after paying a parking fee of the vehicle in the parking lot based on the sensing information comprises:
sending payment information related to the first payment image of the parking lot to the server after paying the parking fee of the vehicle in the parking lot based on the first payment image.

3. The method according to claim 1 or 2, wherein the method further comprises:
sending a first request to the server after the vehicle enters the parking lot, wherein the first request is used to request the payment information of the parking lot; and
receiving a first response returned by the server, wherein the first response indicates that the server is not capable of providing the payment information of the parking lot.

4. The method according to claim 2 or 3, wherein the vehicle-mounted sensing apparatus comprises a collection device configured to collect a traveling video; and the obtaining sensing information collected by a vehicle-mounted sensing apparatus comprises:
when it is detected that the video collected by the collection device comprises a to-be-captured payment image, determining a distance between the vehicle and the to-be-captured payment image; and
adjusting a zoom ratio of the collection device based on the distance, and obtaining a payment image captured by the collection device after the zoom ratio is adjusted.

5. The method according to claim 3 or 4, wherein before the vehicle enters the parking lot, the method further comprises:
obtaining a traveling direction of the vehicle and a geographical location in which the vehicle is currently located; and
sending the traveling direction of the vehicle and the geographical location in which the vehicle is currently located to the server, wherein
the traveling direction of the vehicle and the geographical location of the vehicle are used by the server to retrieve the payment information of the parking lot.

6. The method according to any one of claims 2 to 5, wherein the determining a first payment image from payment images captured by the vehicle in the parking lot comprises:
separately scanning the payment images captured in the parking lot, and determining a control that is comprised in a scanning result and that is used to input a license plate number of the vehicle; and
determining, based on parking record information generated when the stored license plate number of the vehicle is input into the control, the first payment image from the payment images captured in the parking lot.

7. The method according to any one of claims 2 to 6, wherein a scanning result of the first payment image comprises the control used to input the license plate number of the vehicle.

8. The method according to any one of claims 2 to 6, wherein a scanning result of the first payment image comprises the control used to input the license plate number of the vehicle, and the parking record information of the vehicle in the parking lot is generated when the stored license plate number of the vehicle is input into the control.

9. The method according to any one of claims 2 to 6, wherein a scanning result of the first payment image comprises the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

10. The method according to any one of claims 3 to 9, wherein determining that the vehicle enters the parking lot comprises:
when it is recognized that the vehicle meets one or more of the following conditions, determining that the vehicle enters the parking lot:
a strength of a communication signal of the vehicle-mounted terminal of the vehicle is less than a strength threshold, a speed of the vehicle is less than a speed threshold, a distance between the geographical location in which the vehicle is currently located and a geographical location of an entrance of the parking lot is less than a distance threshold, and it is detected that the video collected by the collection device comprises a parking sign of the parking lot.

11. The method according to any one of claims 1 to 10, wherein before the sending the payment information of the parking lot to a server, the method further comprises:
displaying a first interface on a display, wherein the first interface comprises a first control, and the first control is used to request whether to allow sending the payment information to the server; and
sending the payment information to the server in response to an operation that is performed by a user on the first control and that allows sending the payment information to the server.

12. A parking payment method, wherein the method comprises:
receiving payment information that is sent by a vehicle-mounted terminal of a vehicle and that is of a parking lot in which the vehicle is located, wherein the payment information is used to pay a parking fee of the parking lot; and
storing the payment information of the parking lot.

13. The method according to claim 12, wherein the method further comprises:
receiving a first request from the vehicle-mounted terminal, wherein the first request is used to request the payment information of the parking lot, and the first request carries a first geographical location in which the vehicle is currently located; and
determining, based on the first geographical location, the parking lot in which the vehicle is located, and when determining that the payment information of the parking lot is not capable of being provided, returning a first response to the vehicle-mounted terminal.

14. The method according to claim 13, wherein before the receiving a first request from the vehicle-mounted terminal, the method further comprises:
receiving a second geographical location in which the vehicle is located before the vehicle enters the parking lot and a traveling direction of the vehicle that are sent by the vehicle-mounted terminal, wherein a distance between the second geographical location and the parking lot is less than a first distance threshold;
obtaining at least one parking lot within a specified range of the second geographical location; and
predicting, from the at least one parking lot based on the traveling direction of the vehicle, a parking lot that the vehicle is to enter; and
the determining that the payment information of the parking lot is not capable of being provided comprises:
when the first geographical location is in the predicted parking lot, retrieving no payment information of the predicted parking lot from a database; or
when the first geographical location is outside the predicted parking lot, determining at least one candidate parking lot based on the first geographical location; and retrieving no payment information of any one of the at least one candidate parking lot from the database, wherein a distance between an entrance of the any one of the at least one candidate parking lot and the first geographical location is less than a second distance threshold.

15. The method according to claim 14, wherein a quantity of candidate parking lots is N, and the method further comprises:
when retrieving payment information of M candidate parking lots in the N candidate parking lots from the database, determining confidence of the M candidate parking lots, wherein M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determining at least one candidate parking lot from the M candidate parking lots based on the confidence of the M candidate parking lots, and sending payment information of the at least one candidate parking lot to a terminal device of a vehicle owner.

16. The method according to any one of claims 12 to 15, wherein the payment information is sent by the vehicle-mounted terminal after the parking fee of the vehicle in the parking lot is paid, and the method further comprises:
when determining that the payment information of the parking lot is stored in the database, updating a quantity of access times of the stored payment information.

17. The method according to any one of claims 12 to 16, wherein the method further comprises:
obtaining a quantity of access times and latest access time of each of a plurality of pieces of stored payment information;
determining expired payment information in the plurality of pieces of payment information, wherein a time difference between latest access time of the expired payment information and a current moment is greater than a time threshold, and a quantity of access times of the expired payment information is less than a quantity-of-times threshold; and
deleting the expired payment information.

18. A parking payment apparatus, wherein the apparatus comprises a processing unit and a communication unit, wherein
the processing unit is configured to obtain sensing information collected by a vehicle-mounted sensing apparatus, wherein the sensing information is used to determine payment information of a parking lot in which a vehicle is located; and
the processing unit is further configured to: after paying a parking fee of the vehicle in the parking lot based on the sensing information, send the payment information of the parking lot to a server through the communication unit.

19. The apparatus according to claim 18, wherein the sensing information comprises a payment image captured by the vehicle in the parking lot, and the processing unit is further configured to:
determine a first payment image from payment images captured by the vehicle in the parking lot, wherein the first payment image is an image that is capable of being used to pay the parking fee of the vehicle in the parking lot; and
the processing unit is specifically configured to:
after paying the parking fee of the vehicle in the parking lot based on the first payment image, send the payment information related to the first payment image of the parking lot to the server through the communication unit.

20. The apparatus according to claim 18 or 19, wherein the communication unit is further configured to:
send a first request to the server after the vehicle enters the parking lot, wherein the first request is used to request the payment information of the parking lot; and
receive a first response returned by the server, wherein the first response indicates that the server is not capable of providing the payment information of the parking lot.

21. The apparatus according to claim 19 or 20, wherein the vehicle-mounted sensing apparatus comprises a collection device configured to collect a traveling video; and the processing unit is specifically configured to:
when it is detected that the video collected by the collection device comprises a to-be-captured payment image, determine a distance between the vehicle and the to-be-captured payment image; and
adjust a zoom ratio of the collection device based on the distance, and obtain a payment image captured by the collection device after the zoom ratio is adjusted.

22. The apparatus according to claim 20 or 21, wherein before the vehicle enters the parking lot, the processing unit is further configured to:
obtain a traveling direction of the vehicle and a geographical location in which the vehicle is currently located; and
send the traveling direction of the vehicle and the geographical location in which the vehicle is currently located to the server through the communication unit, wherein
the traveling direction of the vehicle and the geographical location of the vehicle are used by the server to retrieve the payment information of the parking lot.

23. The apparatus according to any one of claims 19 to 22, wherein the processing unit is specifically configured to:
separately scan the payment images captured in the parking lot, and determine a control that is comprised in a scanning result and that is used to input a license plate number of the vehicle; and
determine, based on parking record information generated when the stored license plate number of the vehicle is input into the control, the first payment image from the payment images captured in the parking lot.

24. The apparatus according to any one of claims 19 to 23, wherein a scanning result of the first payment image comprises the control used to input the license plate number of the vehicle.

25. The apparatus according to any one of claims 19 to 23, wherein a scanning result of the first payment image comprises the control used to input the license plate number of the vehicle, and the parking record information of the vehicle in the parking lot is generated when the stored license plate number of the vehicle is input into the control.

26. The apparatus according to any one of claims 19 to 23, wherein a scanning result of the first payment image comprises the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

27. The apparatus according to any one of claims 20 to 26, wherein the processing unit is further configured to:
when it is recognized that the vehicle meets one or more of the following conditions, determine that the vehicle enters the parking lot:
a strength of a communication signal of the vehicle-mounted terminal of the vehicle is less than a strength threshold, a speed of the vehicle is less than a speed threshold, the geographical location in which the vehicle is currently located and a geographical location of an entrance of the parking lot are less than a distance threshold, and it is detected that the video collected by the collection device comprises a parking sign of the parking lot.

28. The apparatus according to any one of claims 18 to 27, wherein the processing unit is further configured to:
display a first interface on a display, wherein the first interface comprises a first control, and the first control is used to request whether to allow sending the payment information to the server; and
indicate the communication unit to send the payment information to the server in response to an operation that is performed by a user on the first control and that allows sending the payment information to the server.

29. A parking payment apparatus, wherein the apparatus comprises:
a communication unit, configured to receive payment information that is sent by a vehicle-mounted terminal of a vehicle and that is of a parking lot in which the vehicle is located, wherein the payment information is used to pay a parking fee of the parking lot; and
a storage unit, configured to store the payment information of the parking lot.

30. The apparatus according to claim 29, wherein the apparatus further comprises a processing unit, wherein
the communication unit is further configured to receive a first request from the vehicle-mounted terminal, wherein the first request is used to request the payment information of the parking lot, and the first request carries a first geographical location in which the vehicle is currently located; and
the processing unit is configured to: determine, based on the first geographical location, the parking lot in which the vehicle is located, and when determining that the payment information of the parking lot is not capable of being provided, return a first response to the vehicle-mounted terminal through the communication unit.

31. The apparatus according to claim 30, wherein before the receiving a first request from the vehicle-mounted terminal, the communication unit is further configured to receive a second geographical location in which the vehicle is located before the vehicle enters the parking lot and a traveling direction of the vehicle that are sent by the vehicle-mounted terminal, wherein a distance between the second geographical location and the parking lot is less than a first distance threshold;
the processing unit is further configured to: obtain at least one parking lot within a specified range of the second geographical location, and predict, from the at least one parking lot based on the traveling direction of the vehicle, a parking lot that the vehicle is to enter; and
when determining that the payment information of the parking lot is not capable of being provided, the processing unit is specifically configured to:
when the first geographical location is in the predicted parking lot, retrieve no payment information of the predicted parking lot from the database; or
when the first geographical location is outside the predicted parking lot, determine at least one candidate parking lot based on the first geographical location; and retrieve no payment information of any one of the at least one candidate parking lot from a database, wherein a distance between an entrance of the any one of the at least one candidate parking lot and the first geographical location is less than a second distance threshold.

32. The apparatus according to claim 31, wherein a quantity of candidate parking lots is N, and the processing unit is further configured to:
when retrieving payment information of M candidate parking lots in the N candidate parking lots from the database, determine confidence of the M candidate parking lots, wherein M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determine at least one candidate parking lot from the M candidate parking lots based on the confidence of the M candidate parking lots, and indicate the communication unit to send payment information of a payment image of the at least one candidate parking lot to a terminal device of a vehicle owner.

33. The apparatus according to any one of claims 30 to 32, wherein the payment information is sent by the vehicle-mounted terminal after the parking fee of the vehicle in the parking lot is paid, and the processing unit is further configured to:
when determining that the payment information of the parking lot is stored in the database, update a quantity of access times of the payment information stored in the storage unit.

34. The apparatus according to any one of claims 30 to 33, wherein the processing unit is further configured to:
obtain a quantity of access times and latest access time of each of a plurality of pieces of stored payment information;
determine expired payment information in the plurality of pieces of payment information, wherein a time difference between latest access time of the expired payment information and a current moment is greater than a time threshold, and a quantity of access times of the expired payment information is less than a quantity-of-times threshold; and
delete the expired payment information.

35. A parking payment system, wherein the system comprises:
a vehicle-mounted terminal, configured to obtain sensing information collected by a vehicle-mounted sensing apparatus, wherein the sensing information is used to determine payment information of a parking lot in which a vehicle is located, wherein
the vehicle-mounted terminal is further configured to send the payment information of the parking lot to a server after paying a parking fee of the vehicle in the parking lot based on the sensing information; and
the server, configured to receive and store the payment information.

36. The system according to claim 35, wherein the sensing information comprises a payment image captured by the vehicle in the parking lot, and the vehicle-mounted terminal is further configured to:
determine a first payment image from payment images captured by the vehicle in the parking lot, wherein the first payment image is an image that is capable of being used to pay the parking fee of the vehicle in the parking lot; and
the vehicle-mounted terminal is specifically configured to:
send payment information related to the first payment image of the parking lot to the server after paying the parking fee of the vehicle in the parking lot based on the first payment image.

37. The system according to claim 35 or 36, wherein the vehicle-mounted terminal is further configured to send a first request to the server after the vehicle enters the parking lot, wherein the first request is used to request the payment information of the parking lot;
the server is further configured to: receive the first request, determine, based on a first geographical location, the parking lot in which the vehicle is located, and when determining that the payment information of the parking lot is not capable of being provided, return a first response to the vehicle-mounted terminal; and
the vehicle-mounted terminal is further configured to receive the first response.

38. The system according to claim 36 or 37, wherein the vehicle-mounted sensing apparatus comprises a collection device configured to collect a traveling video; and the vehicle-mounted terminal is specifically configured to:
when it is detected that the video collected by the collection device comprises a to-be-captured payment image, determine a distance between the vehicle and the to-be-captured payment image; and
adjust a zoom ratio of the collection device based on the distance, and obtain a payment image captured by the collection device after the zoom ratio is adjusted.

39. The system according to claim 37 or 38, wherein before the vehicle enters the parking lot, the vehicle-mounted terminal is further configured to: obtain a traveling direction of the vehicle and a second geographical location in which the vehicle is currently located, and send the traveling direction of the vehicle and the second geographical location to the server, wherein a distance between the second geographical location and the parking lot is less than a first distance threshold; and
receive the traveling direction of the vehicle and the second geographical location, and obtain at least one parking lot within a specified range of the second geographical location;
the server is further configured to predict, from the at least one parking lot based on the traveling direction of the vehicle, a parking lot that the vehicle is to enter; and
when determining that the payment information of the parking lot is not capable of being provided, the server is specifically configured to:
when the first geographical location is in the predicted parking lot, retrieve no payment information of the predicted parking lot from a database; or
when the first geographical location is outside the predicted parking lot, determine at least one candidate parking lot based on the first geographical location; and retrieve no payment information of any one of the at least one candidate parking lot from the database, wherein a distance between an entrance of the any one of the at least one candidate parking lot and the first geographical location is less than a second distance threshold.

40. The system according to claim 39, wherein a quantity of candidate parking lots is N, and the server is further configured to:
when retrieving payment information of M candidate parking lots in the N candidate parking lots from the database, determine confidence of the M candidate parking lots, wherein M is an integer greater than 2, N is an integer greater than or equal to M, confidence of a first candidate parking lot is determined based on a distance between an entrance of the first candidate parking lot and the first geographical location and a quantity of access times of payment information of the first candidate parking lot stored in the database, and the first candidate parking lot is any one of the M candidate parking lots; and
determine at least one candidate parking lot from the M candidate parking lots based on the confidence of the M candidate parking lots, and send payment information of the at least one candidate parking lot to a terminal device of a vehicle owner.

41. The system according to any one of claims 35 to 40, wherein the server is further configured to:
when determining that the payment information of the parking lot is stored in the database, update the quantity of access times of the stored payment information.

42. The system according to any one of claims 35 to 41, wherein the server is further configured to:
obtain a quantity of access times and latest access time of each of a plurality of pieces of stored payment information;
determine expired payment information in the plurality of pieces of payment information, wherein a time difference between latest access time of the expired payment information and a current moment is greater than a time threshold, and a quantity of access times of the expired payment information is less than a quantity-of-times threshold; and
delete the expired payment information.

43. The system according to any one of claims 36 to 42, wherein the vehicle-mounted terminal is specifically configured to:
separately scan the payment images captured in the parking lot, and determine a control that is comprised in a scanning result and that is used to input a license plate number of the vehicle; and
determine, based on parking record information generated when the stored license plate number of the vehicle is input into the control, the first payment image from the payment images captured in the parking lot.

44. The system according to any one of claims 36 to 43, wherein a scanning result of the first payment image comprises the control used to input the license plate number of the vehicle.

45. The system according to any one of claims 36 to 43, wherein a scanning result of the first payment image comprises the control used to input the license plate number of the vehicle, and the parking record information of the vehicle in the parking lot is generated when the stored license plate number of the vehicle is input into the control.

46. The system according to any one of claims 36 to 43, wherein a scanning result of the first payment image comprises the control used to input the license plate number of the vehicle, the parking record information of the vehicle in the parking lot is generated when the stored license plate number of the vehicle is input into the control, and a time difference between start time at which the vehicle enters the parking lot and that is recorded in the parking record information and start time at which the vehicle enters the parking lot and that is stored in a vehicle-mounted terminal of the vehicle is less than a specified threshold.

47. The system according to any one of claims 37 to 46, wherein the vehicle-mounted terminal is further configured to:
when it is recognized that the vehicle meets one or more of the following conditions, determine that the vehicle enters the parking lot:
a strength of a communication signal of the vehicle-mounted terminal of the vehicle is less than a strength threshold, a speed of the vehicle is less than a speed threshold, the geographical location in which the vehicle is currently located and a geographical location of an entrance of the parking lot are less than a distance threshold, and it is detected that the video collected by the collection device comprises a parking sign of the parking lot.

48. The system according to any one of claims 35 to 47, wherein the vehicle-mounted terminal is further configured to:
display a first interface on a display, wherein the first interface comprises a first control, and the first control is used to request whether to allow sending the payment information to the server; and
send the payment information to the server in response to an operation that is performed by a user on the first control and that allows sending the payment information to the server.

49. A parking payment apparatus, comprising a processor and a memory, wherein
the memory is configured to store a program; and
the processor is configured to execute the program stored in the memory, so that the apparatus implements the method according to any one of claims 1 to 11.

50. A parking payment apparatus, comprising a processor and a memory, wherein
the memory is configured to store a program; and
the processor is configured to execute the program stored in the memory, so that the apparatus implements the method according to any one of claims 12 to 17.

51. A computer-readable storage medium, wherein the computer-readable medium stores program code, and when the program code is run on a computer, the computer is enabled to perform the method according to any one of claims 1 to **11;** or when the program code is run on a computer, the computer is enabled to perform the method according to any one of claims 12 to 17.

52. A computer program product, wherein when the computer program product runs on a computer, the computer is enabled to perform the method according to any one of claims 1 to **11;** or perform the method according to any one of claims 12 to 17.
